# EUROPEAN PATENT SPECIFICATION

(11) **EP 1 887 747 B1**
(45) Date of publication and mention of the grant of the patent: **08.08.2012**
(21) Application number: 07120480.4
(22) Date of filing: 06.05.2004
(51) Int. Cl.: H04L 12/58

(54) **Messaging system and service**
Nachrichtenübertragungssystem und Nachrichtendienst
Système et service de messagerie

(30) Priority: 06.05.2003 GB 0310366; 20.05.2003 GB 0311592; 08.07.2003 GB 0315984
(43) Date of publication of application: 13.02.2008
(62) Divisional of application: 04731387.9
(73) Proprietor: Apple Inc., Cupertino, CA 95014 (US)
(72) Inventor: Myllynen, Harri, London, W1F 7BY (GB); Leino, Pasi, London, W1F 7BY (GB); Ohrling, Antti, London, W1F 7BY (GB)
(74) Representative: Barton, Russell Glen

(56) References cited:
- WO-A-00/44151
- WO-A-01/93551
- WO-A-96/24213
- US-A1- 2003 040 300

## Description

### Field of the Invention

This invention relates to messaging systems, in particular but not exclusively to messaging carried out using wireless terminals, which operate in communications networks.

### Background of the Invention

Currently the Short Message Service (SMS) is the medium of choice for personal messaging, and several companies have designed systems that are intended to include advertisement information in SMS messages. For example, International patent application WO 03/015430 describes a service whereby advertisement data (including length of advertisement (number of characters), a preview of the advertisement and an identifier associated with the advertisement provided by external sources) are stored on mobile terminal in a "local" store, and the user selects an advert, from the store, to accompany an outgoing message. The terminal then calculates a length available for text, and the sender is allowed to enter a message having a length up to the calculated length. An outgoing message is then created, comprising the advertisement ID associated with the selected advertisement and the user's message text, and having a header indicating that the message has advertising content. The outgoing message is then sent from the terminal and received by the SMSC, which checks the header of the message; any message having an identifier corresponding to the advertisement type is passed to an "ad server". The ad server processes the message, effectively selecting an advertisement from a store, creating one or more messages that comprise the selected advertisement and creating an SMS message that can be read by the recipient's mobile phone terminal.

Since advertisements are selected by the sender from those stored locally on terminal, the terminal needs to be equipped with appropriate software, and the currently selectable advertisement IDs need to be distributed to all subscribing terminals. In addition, the SMSC has to be equipped with some means of identifying these advertisement-type messages from other types of messages in order to route them to the ad server. Furthermore, since each SMS message is limited to 160 characters, the ad server quite often creates a plurality of messages, which means that either the receiving terminal has to be equipped with some software that concatenates the messages together in some elegant manner (since presentation is very important with advertising), or the receiving terminal simply displays the messages separately, as is the case with non-modified SMS messages exceeding 160 characters in length. Neither of these is ideal from the point of view of convenience or presentation.

The new messaging service, known as Multimedia Messaging Service (MMS), offers messages of unlimited size and content type that are compiled as HTTP messages, which means that they offer a transaction capability with possible super-distribution of content along with accuracy, tracking and feedback of messages. However, despite the fact that many mobile telephones have imaging and Multimedia Messaging Service (MMS) capabilities, and despite the fact that the Multimedia Message Service would appear to be a natural choice of messaging format for including advertising content, there is no guarantee that MMS will become as ubiquitous as SMS. This is due to several reasons, namely that there is a perceived high cost of Multimedia messaging; that SMS fulfils basic personal messaging needs; and that rich media messaging requires more imagination and preparation by the user.

International patent application WO96/24213 describes a system for providing free e-mail, in which the cost of providing an e-mail to a recipient is offset by charging advertisers to insert advertisements into the e-mail. E-mails sent between users of a service are routed via a central e-mail messaging center, where they are stored until retrieved by the recipient. On retrieval, an advertisement is added to the e-mail; the advertisement is selected under the control of the advertiser based on, for example, the time of day or demographic information and/or preferences of the recipient.

International patent application WO01/93551 describes a system primarily relating to voice communications between users of a mobile telephone network. The voice communications may be supplemented by playing an audio advertising message prior to connection and/or as a replacement for a ringing tone. The audio advertising message may be based on, for example, demographic or profile relating to a user.

United States patent application US2003/040300 addresses the problem of messages being sent between SMS and EMS systems, and between different versions of the EMS system. It proposes a message gateway, via which all messages are sent, which maintains a database of terminal profiles specifying a format with which each terminal is compatible. On receipt of a message, the message gateway looks up the profile of the destination terminal and, if the profile specifies a different format to that in which the message is rendered, it performs a format conversion of the message, so that the latter is compatible with the destination terminal.

International patent application WO00/44151 describes an electronic mail advertisement system in which messages are sent via a relay device, which appends advertisement data to the message on the basis of display format bits which are specified by the terminal of the sending party.

An object of the present invention is to provide a convenient method of modifying messages, which, from the point of view of the end user, is simple to use.

### Summary of the Invention

According to a first aspect of the present invention there is provided a method of modifying a message sent between messaging parties through a data communications network, the message including transmission data and a message body, the transmission data identifying one or more messaging parties, the messaging parties comprising a sending party and one or more receiving parties of said message, and the message body identifying content thereof which is specified by a sending party, the data communications network including:
a data store arranged to store selectable data;
a database arranged to store messaging party data relating to at least one of said messaging parties, the messaging party data comprising permission information indicative of permission of said messaging party in relation to message modification,
the method including:
in response to receiving said message, identifying at least one said messaging party on the basis of the transmission data;
retrieving (803) messaging party data, including permission information, relating to an identified messaging party from said database;
applying (805) a filtering algorithm to the selectable data on the basis of the retrieved messaging party data, including the retrieved permission information, thereby selecting data for inclusion in the message;
modifying said message so as to include the selected data therein; and
transmitting the modified message to said one or more receiving parties in accordance with the transmission data.

Embodiments of the invention thus provide a means of intercepting messages sent from A to B, modifying the message based on permission information indicative of permission information of A and/or B in relation to message modification, and transmitting the message onto its destination (B). Since the message is not modified by the terminal associated with the sending party, a party can take part in a message modification service according to the invention using a completely standard terminal.

In one arrangement, the message sent through the data communications network is an MMS message, and the modifying step includes adding selected data to the MMS message, and transmitting it as an MMS message; and in another arrangement the message originates from the sender as an SMS message, and the modifying step includes changing the SMS message into an MMS message, which includes both the content of the original SMS message and the data selected according to the method. In yet further arrangements, the message sent through the data communications network is an email message, and the modifying step includes adding the selected data to the email message and transmitting it as an email message; alternatively the message can be transmitted as GPRS data packets and the recipient is notified of the presence of a suitably modified message by means of an SMS message, whereupon the recipient can request delivery of the modified message in the form of GPRS data.

In order to participate in a service embodying this method, parties are required to subscribe to the service; subscription can be performed by entering data into a WAP page that is downloaded to the user's terminal or by entering data by means of a data gathering application running on the terminal. The subscribing step involves registering personal characteristics and statistics, and explicitly consenting to modification of their messages,

The parameters used in the selecting step can be related to one or more of these personal characteristics, such as age, occupation, preferences, context (work, play) etc.; or related to environmental factors such as time of day, day of the week etc. Alternatively the parameter can be selected at random. Preferably the method includes keeping a track of data that have been selected, so as to ensure that the same data are not sent to the same person twice. The parameter may be a value indicating a number of modified messages that a recipient is willing to receive, in which case the method includes checking how many messages the recipient has already received and only modifying the message in the event that the specified number has not been exceeded.

The selectable data are preferably stored in a data store, such as a database, and, in order to enable personalized selection thereof, the selectable data are associated with data describing preferences, time of day, location, occupation, context etc. that characterize the selectable data and that correspond to the parameters. This therefore provides a means of selecting data that are suited to the sender and/or recipient.

The selecting step can include selecting data on the basis of a further parameter which may be related to the location of the sending and/or receiving party. Thus, for example, if the location of the sending party is identified to be in the vicinity of a football ground, the selection of data can include selecting data relating to football. Alternatively or additionally the further parameter can relate to the content of the message specified by the sending party. For example, the parameter could be words within the message; in some instances certain words can be linked with certain selectable data - for example, if the message includes the phrase "You should see my new shoes!", and the word "shoes" is linked to images indicative of a shoe retailer - then the selection of data can include data corresponding to one of these images.

Preferably the selectable data are categorised in some manner into a plurality of categories, and the sending and/or receiving party can specify a specific category of interest. Conveniently the categories can be previewed and selected either via the Web or via WAP-pages. This category selection provides a further means of personalizing the data that are selected for inclusion in the message. In one arrangement the categories are advertisement campaigns, which have a limited life span. When a campaign ends the subscribers who have selected that campaign (i.e. that category) can automatically be offered a new campaign of the same genre, e.g. via a MMS message containing new campaign details, terms and conditions.

Thus with embodiments of the present invention outgoing messages can be decorated with branded rich media content. This content can be tag-formatted advertising but could also be user generated or received from any 3^{rd} party, being appended to messages to as to provide sponsored terminal-to-terminal store-and-forward messaging.

The selected data can include one or more separate entities, for example, one entity can be an animation and another, an auto-play audio clip. The entities can be combined in a single message.

Since, in the first instance, the criterion used to select data to be used in message modification does not rely on input from the sending party when the message is composed, the mobile terminals do not require any additional software over and above the standard operating system software.

For the message sent through the data communications network to be routed to a service performing the method described above, the user does not need to explicitly enter details of the service (in terms of a network destination ID) on his terminal. Instead configuration messages can automatically be sent to the terminal when the user subscribes to the service.

The personal details entered by subscribers are conveniently stored in a database that is independent of network operator, which facilitates providing initial distribution statistics and tracking eventual super-distribution of multimedia content across various network operators.

In addition to providing a system for modifying personal messages emanating from individual subscribers, the invention can be applied to modify messages emanating from information providers and the like.

Further features and advantages of the invention will become apparent from the following description of preferred embodiments of the invention, given by way of example only, which is made with reference to the accompanying drawings.

### Brief Description of the Drawings

Figure 1 is a schematic illustration of a mobile network arranged in accordance with an embodiment of the invention;
Figure 2 is a schematic illustration of data exchanges between components of the system illustrated in Figure 1;
Figure 3 is a block diagram showing components of the Web and WAP services server shown in Figures 1 and 2;
Figure 4 is a schematic block diagram showing components of the proxy message server MMSC shown in Figures 1 and 2;
Figure 5 is a schematic diagram illustrating an MMS message when transmitted from a sender terminal to the proxy message server MMSC shown in Figure 2;
Figures 6 and 7 show user content parts of the MMS message of Figure 5 when transmitted from a sender terminal;
Figure 8 is a flow diagram showing sub-steps of the data exchanges shown in Figure 2;
Figure 9 shows content parts of an MMS message when modified according to an embodiment of the invention;
Figure 10a shows a Web page allowing a subscriber to select a category of interest;
Figure 10b is a schematic illustration of category information and data corresponding thereto, as stored in the database shown in Figures 1 and 2;
Figure 11 is a schematic illustration of an alternative configuration of components of a mobile network according to a second embodiment of the present invention;
Figure 12 is a schematic illustration of an alternative configuration of components of a mobile network according to a third embodiment of the present invention;
Figure 13 is a schematic illustration of an alternative configuration of components of a mobile network according to a fourth embodiment of the present invention;
Figure 14 is a schematic illustration of an alternative configuration of components of a mobile network according to a fifth embodiment of the present invention;
Figure 15 is a schematic illustration of an alternative configuration of components of a mobile network according to a sixth embodiment of the present invention;
Figure 16 is a schematic illustration of a first embodiment of components of a mobile network according to a second aspect of the present invention; and
Figure 17 is a schematic illustration of a second embodiment of components of a mobile network according to a second aspect of the present invention.

### Detailed Description of Drawings

Embodiments of the invention are concerned with modification of data messages en route for a recipient. Specifically, embodiments are concerned with performing a modification that is independent of the subject matter of the data messages, instead basing the modification on some parameter that is extrinsic to the content of the message. The nature of this modification, and the criteria used to make the modification, will be described in detail later in the description, but first a description of the infrastructure needed to support the modification will be presented.

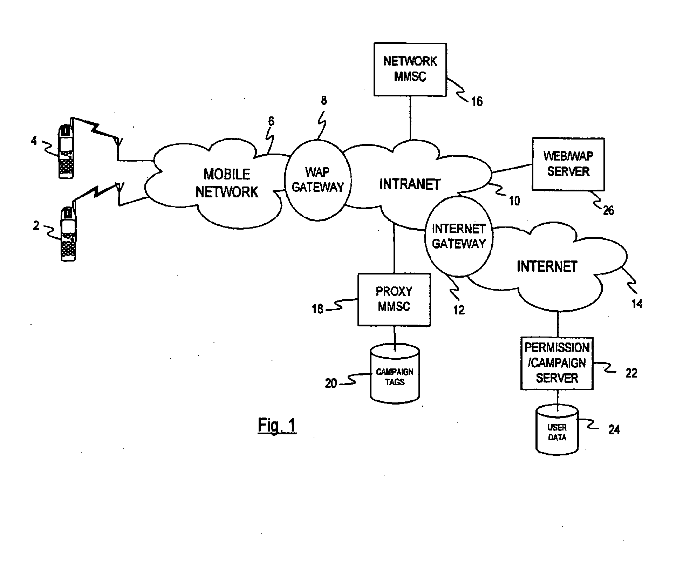

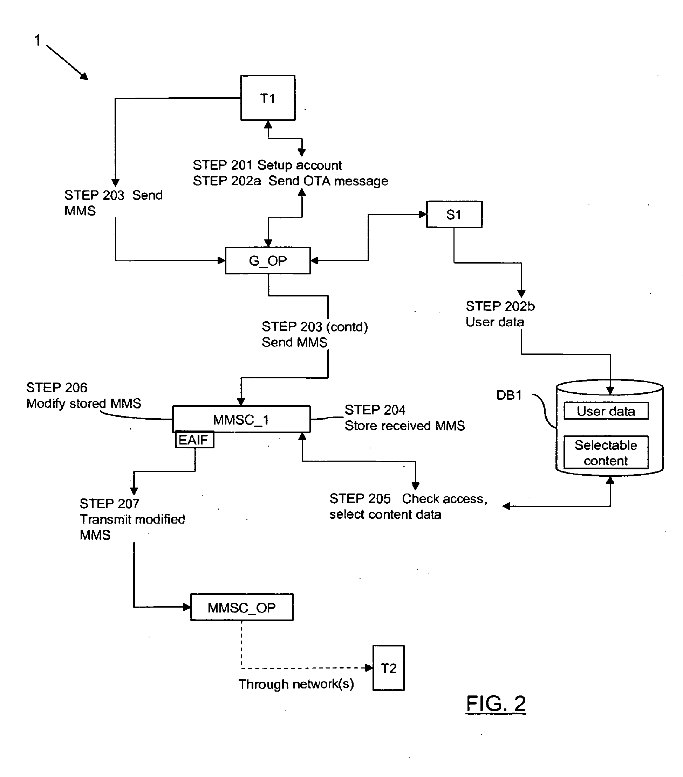

Figures 1 and 2 show an example of a data messaging system 1 within which embodiments of a first aspect of the invention operate. In Figure 2, the arrows indicate data flows within the data messaging system 1 and the blocks indicate components of the data messaging system 1. This embodiment, hereinafter referred to as a message modification service, is concerned with Multimedia messages (MMS messages), but the messages could be short messages (SMS), email messages, bespoke messages in the form of GPRS data and/or streamed data; the specific arrangement of the data messaging system 1 is dependent on the type of message being transmitted, and alternative configurations are described later.

In the arrangement shown in Figures 1 and 2, a terminal T1 communicates with various network devices within the data messaging system 1. The terminal T1 may be a wireless terminal such as a mobile phone, a PDA or a Laptop computer. The data messaging system 1 comprises a WAP gateway G_OP, which is typically a network operator's WAP gateway; a Web and WAP services server S1, with which the terminal T1 communicates; first and second store-and-forward message servers MMSC_1, MMSC_OP, the second being a network operator's store-and-forward message server configured to store and forward messages in accordance with conventional methods; and a database DB1, arranged to store data in respect of subscribers, terminals such as T1 and content data.

In one arrangement the first message server MMSC_1, together with the Web and WAP services server S1, is arranged to operate inside the network operator's network, whilst the database DB1 is located within a proprietary network, which means that it is independent of any specific network operator and can be shared across a plurality of network operators. The database DB1 can either be provided by two separate databases 20, 24, as shown in Figure 1, or by a single database, as shown in Figure 2.

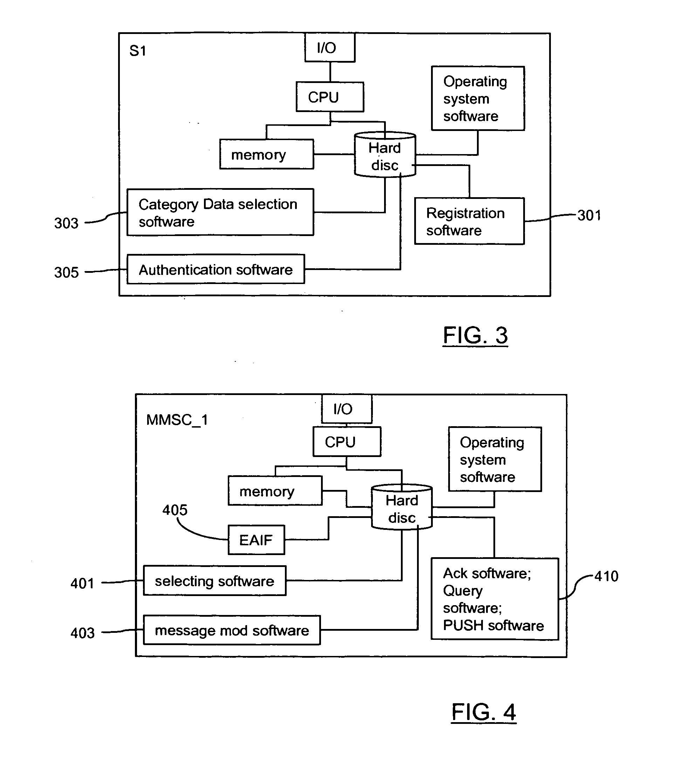

Referring to Figure 2, the Web and WAP services server S1 can be accessed by a user of the terminal T1 actuating a URL corresponding to the server S1. Referring to Figure 3, in addition to standard CPU, memory, data bus, Input/Output ports, data storage, and operating system programs, the server S1 comprises registration software 301, which processes requests to subscribe to the message modification service, while additionally receiving identification and preference data in relation to the subscriber; category selection software 303, which processes incoming category selection requests; and authentication software 305, which authenticates incoming requests for access to the category selection software. The data selection, identification and preference data are subsequently stored in the database DB1 for subsequent access by the first message server MMSC_1. The server S1 can either be provided by two separate servers 22, 26 (with the registration software 301 on server 26 and the authentication and category selection software 303, 305 on server 22) as shown in Figure 1, or by a single server, as shown in Figure 2.

The first message server MMSC_1 can be considered a "proxy" store-and-forward message server, which is located between the network operator's WAP gateway G_OP and the network operator's message server MMSC_OP. Referring to Figure 4, the MMSC_1 comprises standard processing components, and includes conventional software or hardware means for: notifying, in response to receipt of an MMS, the sending party that it has accepted the MMS; interrogating subscriber databases to determine whether the intended recipient has an MMS-compatible phone; informing the intended recipient that an MMS is available; and, in response to a request from the recipient, sending the message thereto (shown in combination in box labeled 410). In addition to these standard components, the MMSC_1 includes selecting software 401 for selecting data to add to an incoming message (described in more detail below), message modifying software 403 for modifying the incoming message so as to include the selected data (described in more detail below); and an external application interface (EAIF) 405 that is configured to enable the message server MMSC_1 to communicate with the operator's message server MMSC_OP, specifically to forward the modified messages to the operator's MMSC_OP in accordance with standard methods.

The selecting software 401 is arranged to identify sender and/or recipient information from an incoming message and select, by accessing the database DB1, the sender and/or recipients' permission and preference settings in order to determine how to modify the incoming message. The modifying software 403 is arranged to modify the incoming message in accordance with input from the selecting software 401, sending the modified message to the recipient in one of a plurality of formats (e.g. SMS or MMS). Preferably the proxy (or first) message server MMSC_1 communicates with the database DB1 via a Internet virtual private network (VPN) connection, and is arranged to cache, e.g. in an SQL database, permission and preference information so that it can operate the service even in case of VPN outages.

The registration software 301, category selection software 303, authentication software 305, selecting software 401 and modifying software 403 are preferably written in the Java programming language. The server S1 could, for example, be an Apache HTTP server, and the proxy message server MMSC_1 could be a J2EE JMS Server (see http://openjms.sourceforge.net/). The registration software 301, category selection software 303 and authentication software 305 could be Java™ servlet containers configured to run within a Java platform such as Java 2 Platform Standard Edition v1.4.1 (for further information see resources available from Sun Microsystems™ e.g. at http://java.sun.com/j2se/1.4.1/ and http://java.sun.com/products/servlet/index.html). The skilled person will appreciate that the software could be written in any suitable language.

Referring back to Figure 2, one way of setting up an account with, and making use of, the message modification service according to this embodiment will now be described. At step 201 the user enters the URL corresponding to the Web and WAP services server S1, which causes the registration software 301 to send a Web page from the server S1, via the WAP gateway G_OP, where it is modified, using conventional techniques, into a format suitable for display on the user's terminal T1, and sent to the terminal T1. The user then enters various registration details into the web page and the terminal T1 sends the details to the server S1, via the WAP gateway G_OP. Referring back to Figure 2, as part of the registration process, the user enters personal information details, such as name, address, terminal details (including capabilities), sex, occupation, interests, etc. and these details are stored, at step 202b, in the database DB1. Also a part of the registration process, the registration software 301 sends the user a user ID and password for accessing the server S1.

Alternatively the terminal T1 could have, stored thereon, an application arranged to capture such demographic data (not shown in the Figures) and which encapsulates the captured data in SMS messages or as GPRS packets and then transmits the same to the server S1. A suitable application could be transmitted to the terminal T1 (e.g. via GPRS or Bluetooth) in response to a request received by the server S1 from the terminal T1 and would be of a format suitable for cooperating with the operating system in use on the terminal T1 (alternatively the application could be pre-loaded onto the terminal T1).

Having completed the registration process, the registration software 301 sends, at step 202a, data via an Over-The-Air (OTA) MMS settings message, to the terminal T1, with details of the proxy message server MMSC_1. In response to receiving this message, the operating system programs on the terminal T1 automatically configure the default MMSC settings including the network address (URL) of the proxy message server MMSC_1 in accordance with the settings in the message. This therefore means that any MMS messages subsequently sent from the terminal T1 will be sent to the proxy message server MMSC_1 in the first instance. For further information regarding use of OTA protocol for the delivery of data to a WAP client from a WAP server, the reader is referred to literature available from the WAP Forum Ltd., in particular "Wireless Application Protocol, PUSH OTA Protocol Specification", published 16th August 1999, available from http://www.wapforum.org/what/technical/PROP-PushOT A-19990816.pdf

In addition to storing and processing registration requests, the server S1 is arranged to display, on request, a plurality of selectable categories, from which the subscriber can select. The subscriber can attempt to access the server S1 at any time, causing the authentication software 305 to authenticate or otherwise the access request. Several authentication methods are possible, one being based on the user's mobile phone number or the terminal ID (this being identifiable from, e.g. the header of a message associated with the access request), and another being via a web page having data entry fields corresponding to user name and password. Once authenticated, the user can select a category from the plurality, causing the selected category to be stored in the database DB1, along with other data associated with this user. The categories represent subject areas of interest - e.g. types of music, football, types of drinks etc. These selected category data, along with the user data stored at step 202b, are then available for use by the selecting software 401 running on the proxy message server MMSC_1, as will be described in more detail below. Alternatively, and in the event that the terminal T1 has a suitable local application stored thereon, the category data could be sent from the terminal T1 to the server S1; in such an arrangement the category data from which selection is to be made could be made available to the terminal T1 by means of the server S1 sending category data to the terminal T1 via SMS messages or as GPRS packets.

The aspect of category selection is not essential to the invention, but is a preferred feature, since it enables the proxy message server MMSC_1 to select content that matches some aspect of the sender's interests. Further aspects of this category selection are described in more detail below.

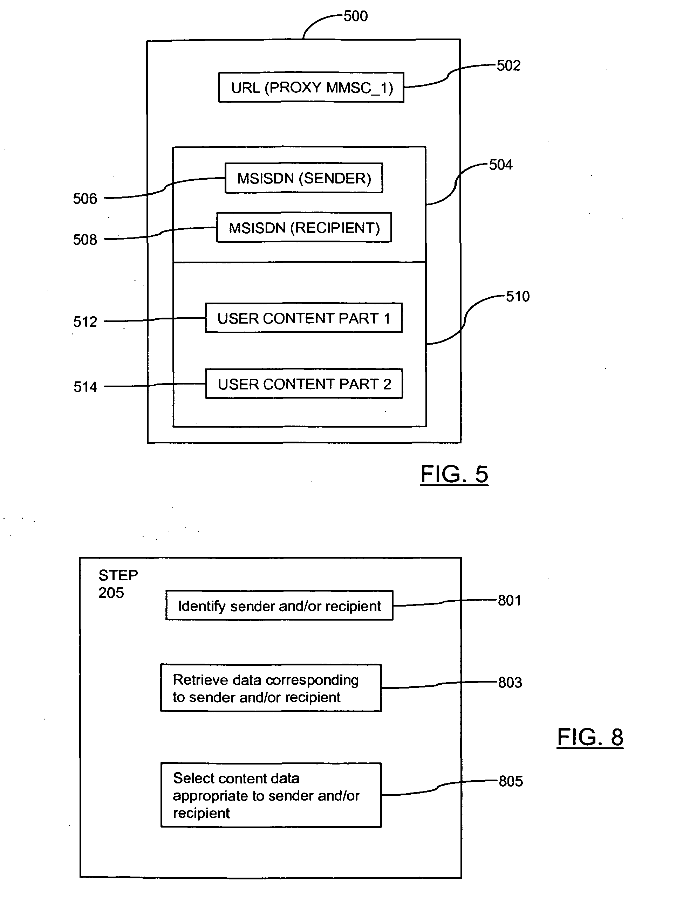

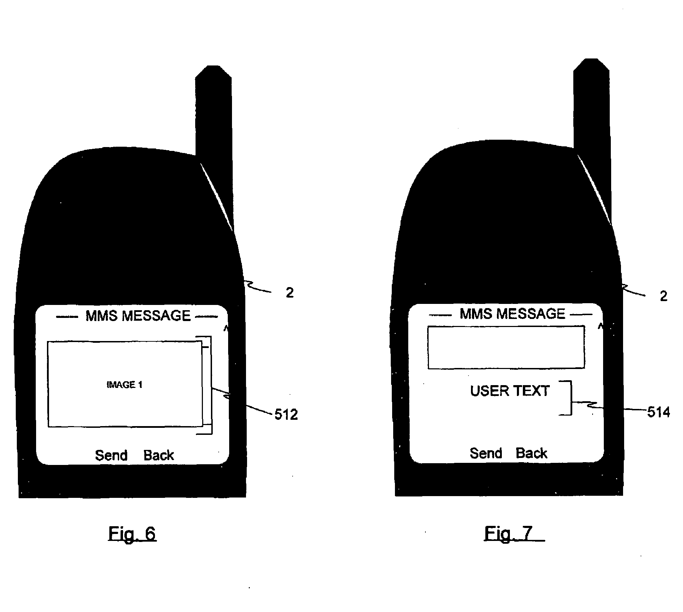

Having registered with the service and modified the store-and-forward multimedia message server settings on the terminal T1, any subsequently sent MMS messages by the terminal T1 will be directed to the proxy message server MMSC_1 and modified thereby, as will now be described with reference to Figures 5 - 7. At step 203, a MMS message is sent by the terminal T1; this message is encapsulated in an HTTP POST message including HTTP header 502 which identifies with the appropriate URL that the proxy message server MMSC_1 is the HTTP message recipient. The HTTP message body includes MMS header portion 504 and MMS body portion 510. The MMS body portion 510 includes one or more user content parts 512, 514, such as those illustrated in Figures 6 and 7.

At step 204, the MMS message 500 is received and stored by the proxy message server MMSC_1, in accordance with conventional techniques and at step 205, the selecting software 401 selects content data from the database DB1. Referring to Figure 8, this step involves performing a plurality of sub-steps: firstly identifying (sub-step 801) the sender and recipient of the message (parts 506, 508); secondly retrieving (sub-step 803) user data from the database DB1 corresponding to the sender and/or recipient; and thirdly applying (sub-step 805) a filtering algorithm to the content data stored in the database DB1, using the user data retrieved at sub-step 803, in order to select content data appropriate to the received MMS. The nature of this filtering algorithm is described in more detail below.

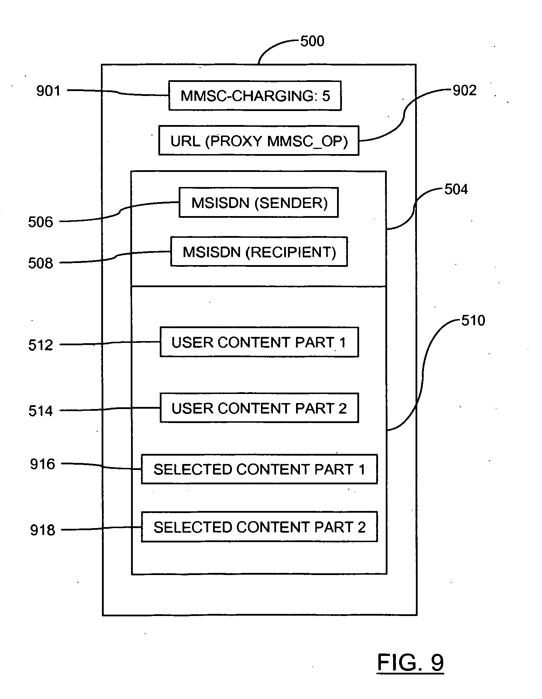

Once the content data have been selected, the message modification software 403 modifies, at step 206, the MMS that was stored at step 204. An MMS so-modified is shown in Figure 9: the MMS is encapsulated in an HTTP POST message 900 including HTTP header 902 which identifies the network operator's message server MMSC_OP as the HTTP message recipient; the HTTP message body includes MMS header portion 504 and MMS body portion 510. The MMS message body portion 510 includes, in addition to one or more user content parts 512, 514, one or more content parts 916, 918. The HTTP message can also include an extension HTTP header 901, which includes charging information. At step 207 the modified MMS is transmitted to the network operator's message server MMSC_OP, and thereafter is delivered to the recipient (T2) in accordance with conventional methods.

As stated above, embodiments of the invention are concerned with modification of data messages en route for a recipient. The use of OTA messages to modify settings on a terminal, for use in re-directing messages whose content is to be modified without direct input from the sender is new. Thus the data messaging system 1, the proxy message server MMSC_1 and the functionality provided by the Web and WAP server S1 described above are new. Since the nature of this modification is not directly dependent on any input from the sender of the message, neither the sender nor recipient is required to modify their terminal. Furthermore, and as stated above, the idea of using OTA settings to direct messages to devices associated with the service means that the terminals do not need to be modified in this respect either. This therefore means that the service can be used independent of terminal type, which is a significant advantage.

The aspects of data selection - step 205 (and sub-steps 801, 803, 805) - will now be described in more detail.

As described above, once a user has subscribed to the message modification service, he can subsequently access the server S1 to specify a category of interest, which is then used by the proxy message server MMSC_1 in selection of data when modifying an incoming message. In one embodiment the data to be included in the messages (sub-step 805) is branded rich media content, in which case the categories from which the subscriber can select corresponds to a brand and the content is advertising content, referred to herein as a Tag element.

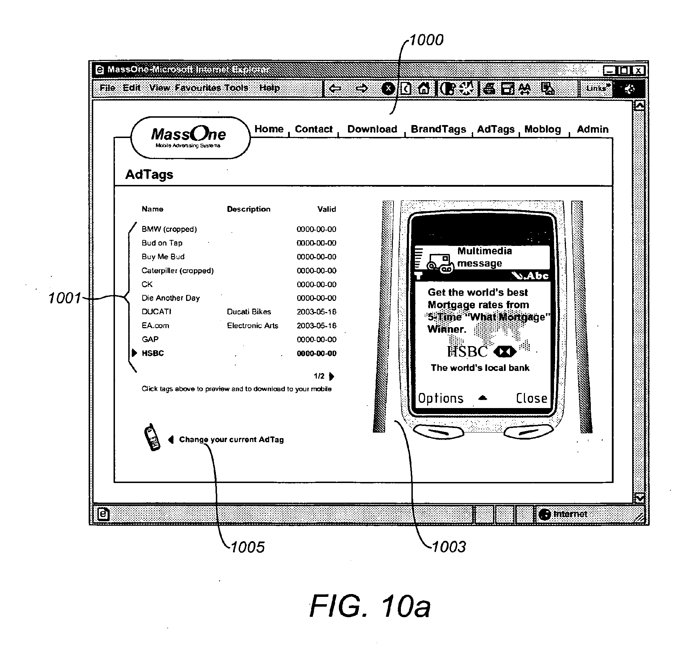

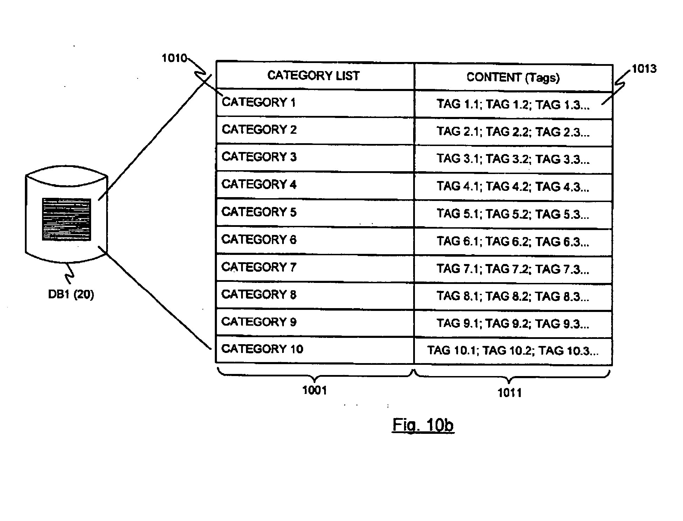

Figure 10a shows a Web page 1000 allowing a participating message sender to select a category 1001, and an example of a tag 1003 within one of the categories; modification of a currently selected category can be made via item 1005 on the Web page 1000. Figure 10b shows category information 1001 and content (Tags) 1011 corresponding thereto, and shows that each category 1010 has a plurality of Tags 1013 associated therewith. Once a category has been selected by the sender, and when an MMS message is subsequently sent by the corresponding sender (step 203) the selecting software 401 running on the proxy message server MMSC_1 selects (sub-step 805) one or more of the Tags in the selected category to be added to the message being sent.

There are several advantages associated with this category feature of the invention, a first of which is that it provides a means of ensuring that content that is selected by the selecting software 403 is relevant to the sender's and/or recipient's interests, thereby removing the need for the sender to include this information in the messages to be modified. A second advantage is associated with the fact that the categories are stored and maintained in a central location. In the event of a change of category (which is common in the field of advertising), the change only needs to be effected at a central location, rather than having to distribute data identifying the updated categories to each subscriber to the message modification service.

As described above, at sub-step 805, the selecting software 401 applies a filtering algorithm to select an appropriate Tag to add to the message. Functionally, the filtering algorithm ensures that different Tags, each in the same user-selected category, are added to subsequent messages transmitted using the system, and generally that various of the different Tags available in a category are added to different messages. More specifically the filtering algorithm employs one or more of several parameters to select, from all of the Tags available in a category, the Tag or Tags to be added to the current message. As stated above, the selection of Tag is not directly related to input from the sender of the message, meaning that these parameters are essentially unrelated to the content of the MMS message (the content being parts 512, 514 shown in Figure 5).

Instead, these parameters include one or more of:
1. The sender identity (either sending terminal T1 or information service (see below)), as identified in the MMS message header 504 (part 506), and data associated with the sender identity, such as:
   a. data identifying a stage in the category the sender is, as determined by the number and/or type of Tags previously sent by the sender;
   b. data identifying sender characteristics, such as age, sex, etc.;
   c. current context of the sender (i.e. home or at work);
   d. whether the sender has explicitly opted out of a particular category
2. The recipient identity, as identified in the MMS message header 504 (part 508) and data associated with the recipient identity, such as:
   a. data identifying a stage in the category the recipient is, as determined by the number and/or type of campaign messages previously received by the recipient;
   b. data identifying recipient characteristics, such as age, sex, etc.;
   c. current context of the recipient (home or at work);
   d. whether the recipient has explicitly opted out of a particular category;
3. A combination of sender and recipient identities (as per 1. and 2. above);
4. The current time and/or date;
5. Scheduling data for Tags;
6. Data relating to events occurring at that date or time (so that the selecting software 401 is arranged to access various electronically available entertainment listings, such as TV, films etc.);
7. A random selection parameter, causing the selection to vary between messages.

In order to select Tags on the basis of on one or more of these parameters, each of the Tag is characterized in some manner, and indeed, such characteristics data are stored in DB1 together with data identifying the Tags themselves.

Selection can also be based on the content of the MMS message itself (parts 512, 514). For example, Tags may be linked to certain words, or phrases, that appear in the message 500 - e.g. if the user content part 512 includes the word "beer" (so that the message could be, for example, "Hi Steve, meet me at the Crown for a beer or six!"), one of the Tags linked to the word "beer" could be selected by the selecting software 401 at sub-step 805. Additionally or alternatively selection can be based on the location of the sender and/or recipient. For example, if the sender is identified to be at a cricket match, then, assuming there to be a mapping between cricket and Tags, one of the Tags linked to a cricket location could be selected at sub-step 805.

If the selecting software 401 determines, at sub-step 801, there to be multiple recipients, the selecting software 401 may either select a different Tag for each recipient or may select one that best matches the characteristics of all of the recipients. The latter may be achieved by evaluating characteristics of Tags against characteristics of each recipient, quantifying the evaluation into a score for each Tag and selecting whichever Tag has the highest score. In the event that the recipients and sender have previously selected categories that are different with respect to one another, the selecting software 401 can either only select Tags within the category corresponding to the sender, or identify the category most common to all recipients and sender and select Tags within that identified category.

The categories displayed on the Web page 1000 for selection therefrom can be dependent on characteristics of the subscriber. For example, when subscribing to the message modification service (step 201) the registration software 301 may ask the subscriber for his home, or preferred, location. As described above, these data are stored in database DB1 as user data at step 202b, so that, when a subscriber subsequently logs in to select a category, the category selection software 303 can display only those categories that match the subscriber's location. Other parameters can be used when determining which categories to display.

Whilst in the above embodiment settings corresponding to the proxy message server MMSC_1 are sent via an OTA message, they could alternatively be embedded in the terminal's SIM card, so that the subscriber receives and changes SIM when he has subscribed to the service. As a further alternative, the user could be notified of the settings and manually change them.

As an alternative to the proxy message server MMSC_1 implementation, the present invention could be installed as a filtering application (not shown) on the operator's message server MMSC_OP. In the event that the processing load associated with the selecting and modification of messages becomes significant, the data messaging system 1 could also include a separate, secondary MMS message server (not shown), which is configured with the selecting software 401, message modification software 403 and the EAIF 405. In such an arrangement the filtering application running on the operator's message server MMSC_OP could be arranged to pass messages that are identified to have been received from a subscriber to the service to this secondary MMS message server. In either of these arrangements the step of sending an OTA message to re-set MMSC settings in the subscriber's terminal would not be necessary.

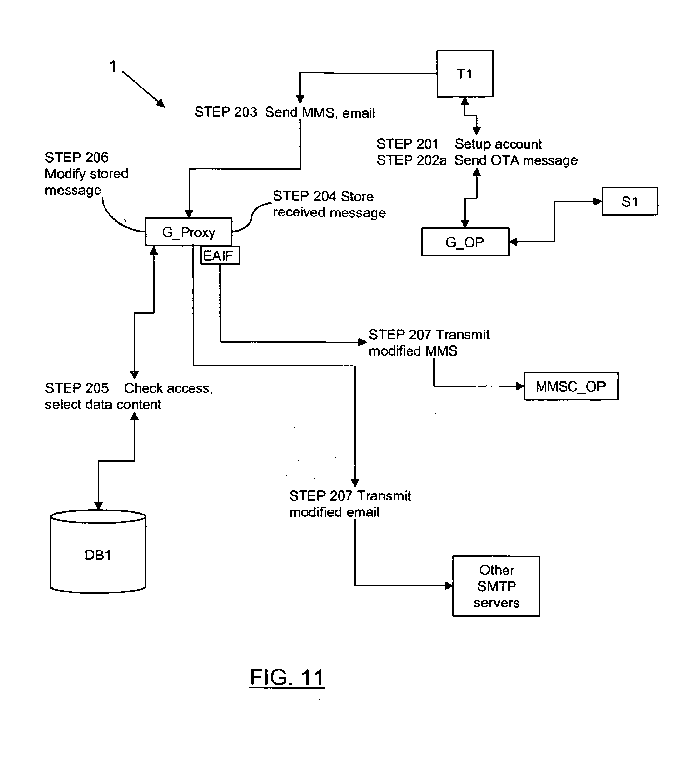

As stated above, the arrangement shown in Figures 1 and 2, and the foregoing description is specifically tailored to the sending of MMS messages. However, the idea of modifying a message without requiring direct input from the sender, instead basing the modification on some parameter that is extrinsic to the content of the message, can be applied to other message types, such as SMS, email and streamed data (e.g. multicast data). The arrangement of the data messaging system 1 can be expected to vary, depending on the type of message to be sent, and Figures 11 - 14, together with the following description, briefly outlines alternative arrangements of the data messaging system. In these figures, where the functionality is identical or equivalent to that described with reference to Figure 2, identical reference numerals are used; if there is additional, or substantial differences in functionality, different reference numerals are used.

The data messaging system 1 shown in Figure 11 is suitable for sending MMS messages or email messages. In this arrangement, the settings sent at step 202a correspond to a proxy WAP gateway G_Proxy, which has conventional WAP gateway functionality plus an SMTP server combined with the store-and-forward software 410, selecting software 401, message modification software 403 and the EAIF 405. The store-and-forward software 410 essentially includes components that are configured to store and transfer emails accordance with the SMTP protocol and components configured in accordance with MMS message handling (described above) (for information specifically related to SMTP issues, the reader is referred to Request For Comments (RFC) 2821, available from the IEEE at http://www.rfc-editor.org/).

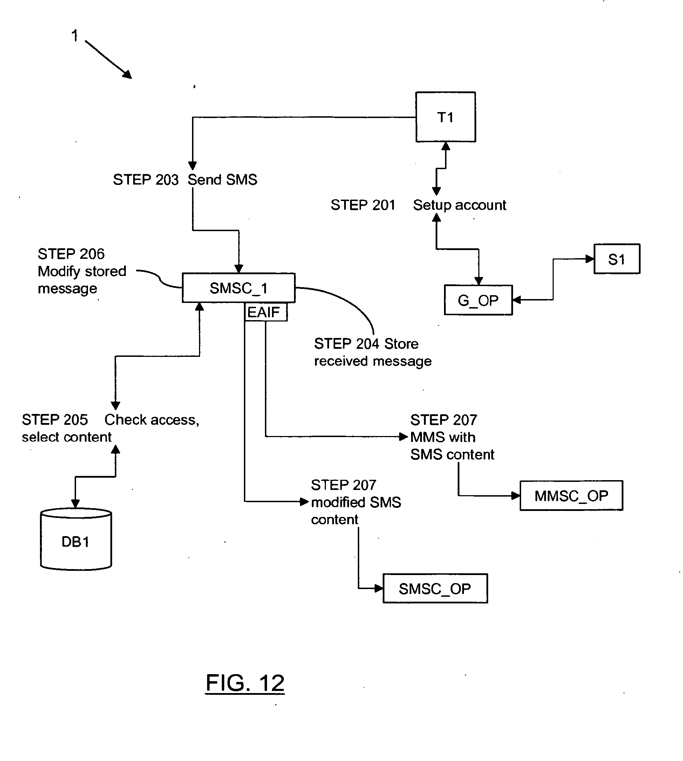

The data messaging system 1 shown in Figure 12 is suitable for a subscriber sending SMS messages. In this arrangement the settings on the terminal T1 corresponding to the SMSC have been modified in some manner, so that outgoing SMS messages are directed to the proxy short message server SMSC_1. The message modification software 403 is arranged to either embed the content of the received message (parts 512, 514) into an MMS message (which then includes selected parts 916, 918), thereby effectively changing an incoming SMS message into an outgoing MMS message, or, if the terminal corresponding to the recipient is not MMS-enabled, to modify the received SMS message so that it includes selected parts 916, 918 (or ASCII character versions thereof), and forward the modified message as an SMS message.

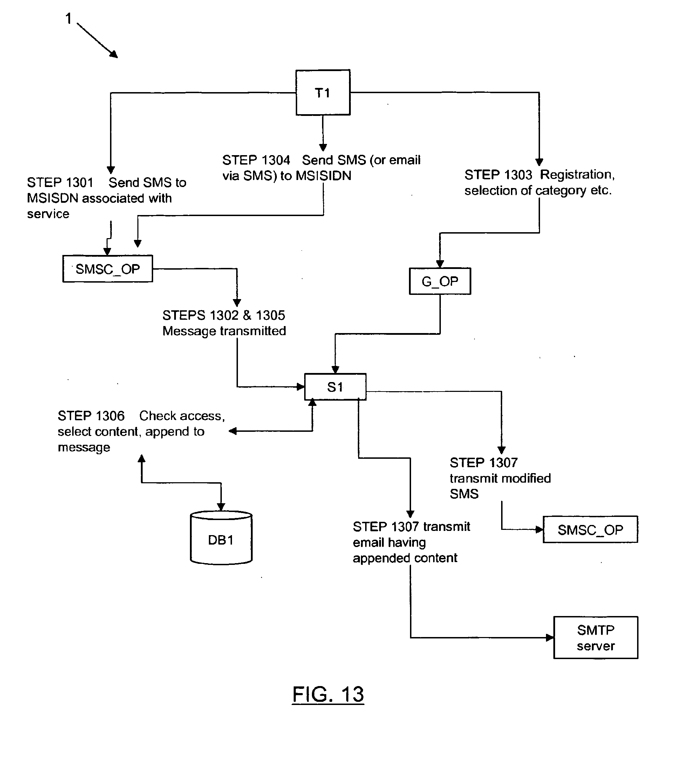

Figure 13 shows a yet further arrangement of the data messaging service 1 that is suitable for sending SMS or email messages that have emanated as SMS messages. In this arrangement, registering with the message modification service involves firstly sending an SMS to a number associated with the service (steps 1301, 1302), then logging into a web page associated with the service in order to enter the various user details required by the service (step 1303). In this arrangement the selecting software 401 and message modification software 403 are stored on, and processed by, the WAP and Web services server S1, which thus additionally acts as a store-and-forward server.

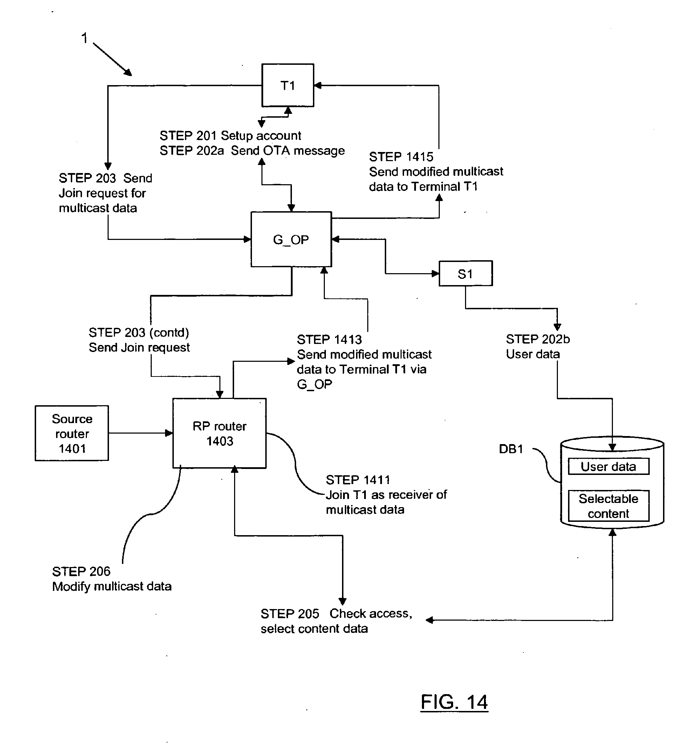

Figure 14 shows a yet further arrangement of the data messaging service 1 that is suitable for sending multicast data to the terminal T1. In this arrangement, the subscriber registers with the service as described above, but the service is linked to a router in the network that is responsible for the distribution of multicast data to IP-enabled receivers. In the case where the multicast content provider is distributing its multicast content in accordance with PIM-Sparse mode protocol, there is a rendez-point router (shown as RP router 1401 in Figure 14), which receives "Join" requests from receivers, and joins them to the distribution of multicast data emanating from the source (shown as source router 1403). In this arrangement a conventional RP router 1401 is modified so as to include the selecting software 401 and message modification software 403 as described for the other embodiments, which collectively add content data (steps 205, 206) to the multicast content. In this example the subscriber associated with terminal T1 is the recipient of the data and the source 1401 is the sender. For more information regarding the PIM Sparse Mode protocol, the reader is referred to "Multicast networking and applications", by C. Kenneth Miller, Published by Addison-Wesley, ISBN 0-201-30979-3.

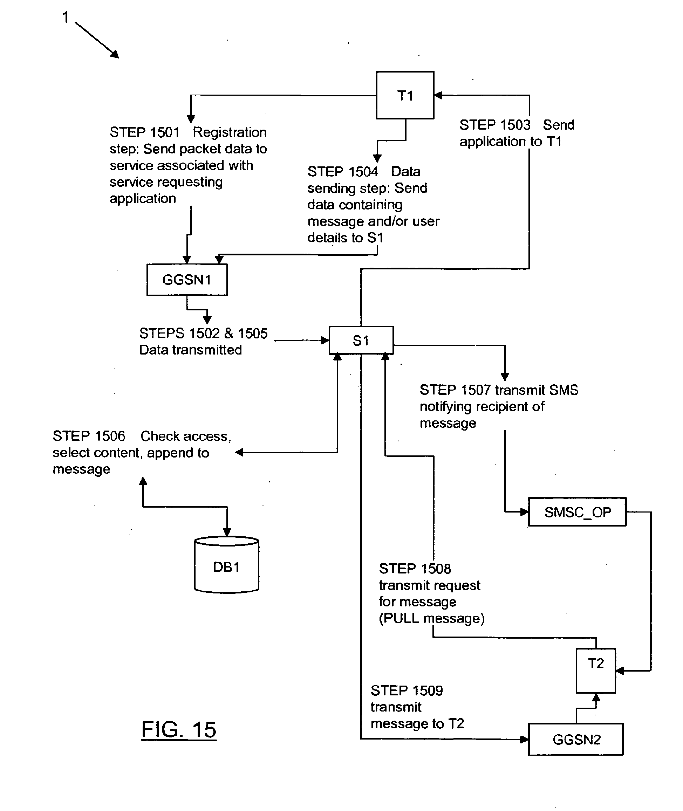

Figure 15 shows another arrangement of the data messaging service 1 in which messages are sent to the server S1 via gateway GPRS support node GGSN 1 as data packets (steps 1504, 1505), and the server S1 modifies the message (step 1506). Having modified the message, the server S1 stores the same and sends a notifying SMS message (step 1507) to the recipient; in response to receipt of the notification message the terminal T2 has the opportunity to retrieve the stored message from the server S1 (steps 1508, 1509). In the arrangement shown in Figure 15, an application is sent to the terminal T1 from the server S1 in response to receipt of a registration message (steps 1501, 1503) and both the user's demographic information and any subsequently composed messages are captured by the application and then sent onto the server S1 via GGSN1. It will be appreciated that the demographic data could instead by entered via a WAP page that is sent to the terminal T1 as described above in the context of the foregoing embodiments.

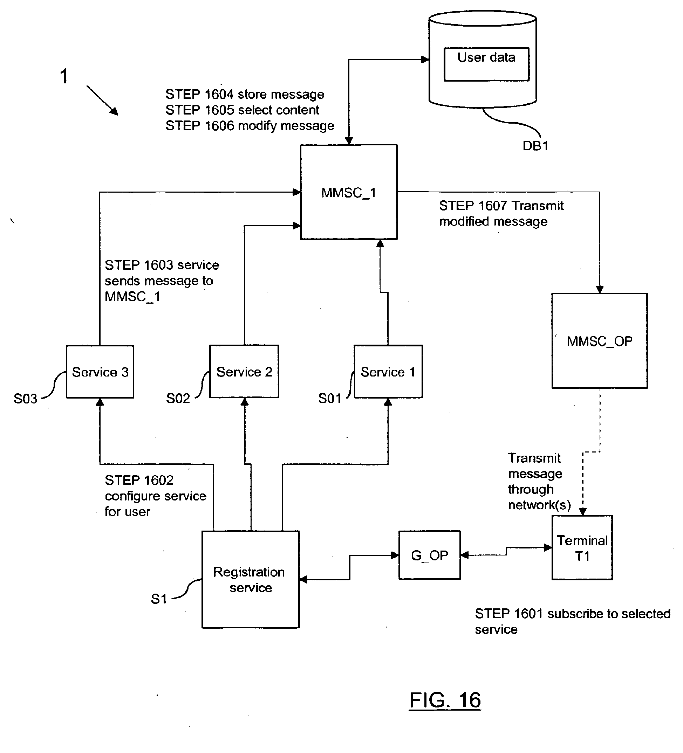

The foregoing embodiments describe arrangements for modifying messages emanating from individual subscribers. However, the invention can also be applied to modify data messages emanating from an information source, and a suitable arrangement for performing such a modification is shown in Figure 16. Parts shown in Figure 16 that are identical to those shown in Figures 1 - 15 are allocated identical reference numbers and identifiers and will not be described in any further detail; as for the figures relating to modification of personal messages, the arrows indicate data flows within the data messaging system 1 and the blocks indicate components thereof.

In this aspect of the invention messages typically originate from an information service provided by an automated software application running on a server connected to the network, which is generally referred to herein as a content provider. In the arrangement shown in Figure 16, the data messaging system 1 comprises WAP gateway G_OP; a plurality of content servers S01, S02, S03 configured to generate and transmit messages to a terminal T1 in accordance with specified conditions; a services server S1 arranged to receive requests from the terminal T1 for content from one or more of the content servers S01, S02, S03; first and second store-and-forward message servers MMSC_1, MMSC_OP; and a database DB1, arranged to store data in respect of subscribers, terminal T1 and content data. Each of the content servers S01, S02, S03 is associated with a particular content provider.

In one arrangement the first message server MMSC_1, together with the services server S1, are arranged to operate inside an operator's network. The services server S1 handles requests for content data from the terminal T1 either on a per-request basis or on an on-going basis as specified by a user of the terminal T1 when subscribing to the content service, sending requests onto an appropriate one of the content servers S01, S02, S03 accordingly. The server S1 is also arranged to receive details of those users who have additionally subscribed to a message modification service according to an embodiment of the invention, and to this end is configured as, and operates in accordance with, the arrangement shown in Figure 3.

Each content server S01, S02, S03 is configured in such a way that MMS messages destined for a subscriber to the message modification service are sent to the first message server MMSC_1 rather than to the second (network operator's main) message server MMSC_OP. Accordingly data identifying the address of the first message server MMSC_1 are configured in each of the content servers S01, S02, S03 so that MMS messages emanating therefrom are sent to the first message server MMSC_1 in the first instance. The steps involved in modifying a message by the data messaging system 1 will now be described, assuming that the user of Terminal T1 has placed a request with server S1 for data relating to estimated departure times of trains departing from London Victoria destined for Lyme Regis at 17:30. Assuming a request for this information to have been received by content server S01, a MMS message comprising this information is sent by the content server S01 at 17:30 (step 1603). At step 1604, the MMS message is received and stored by the proxy message server MMSC_1, in accordance with conventional techniques and at step 1605 the selecting software 401 selects content data from the database DB1 as described above with reference to Figure 8. Once the content data have been selected, the message modification software 403 modifies, at step 1606, the MMS that was stored at step 1604 so as to include at least part of the selected content data and the modified MMS is transmitted to the network operator's message server MMSC_OP at step 1607, the message being subsequently delivered to the recipient (T1) in accordance with conventional methods.

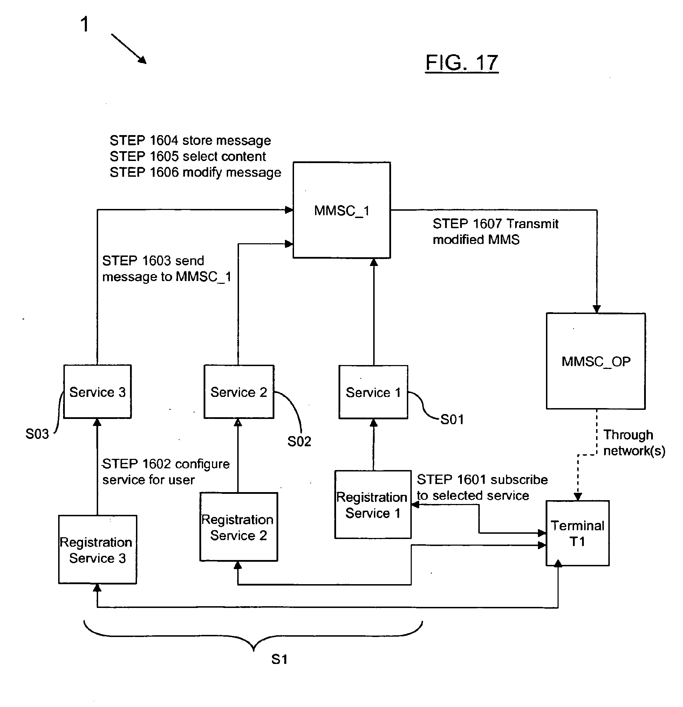

As shown in Figure 16, the services server S1 is typically managed by the network operator, whilst the content servers S01, S02, S03 are managed by third parties. However, each content server S01, S02, S03 can have a services server associated therewith, in which case both the service server S1 and the content server will be managed by third parties; such an arrangement is shown in Figure 17. Whilst in the first aspect of the invention settings corresponding to the proxy message server MMSC_1 are sent via an OTA message to user terminals (since this is where the messages originate), in embodiments according to this second aspect of the invention (where messages originate from content servers S01, S02, S03) the content servers could be notified of the settings, e.g. via an email or SMS message and automatically change their proxy server settings in response to receipt thereof.

It is to be noted that, whilst in the embodiments above the content data are branded media content, the invention could be applied to many other types of content data. For example, a service according to the invention may be used in tracking the eventual super-distribution of multimedia content across different operators, in which case special tags (e.g. in SMIL files and watermarks in multimedia files), each being associated with an operator, could be used.

## Claims

1. A method of modifying a message (500) sent between messaging parties through a data communications network (6, 10, 14), the message including transmission data (504) and a message body (510), the transmission data (504) identifying one or more messaging parties, the messaging parties comprising a sending party and one or more receiving parties of said message, and the message body (510) identifying content thereof which is specified by a sending party, the data communications network (6, 10, 14) comprising:
a data store (DB1; 20) arranged to store selectable data;
a database (DB1; 24) arranged to store messaging party data relating to at least one of said messaging parties, the messaging party data comprising permission information indicative of permission of said messaging party in relation to message modification,
the method including:
in response to receiving said message (500), identifying (801) at least one said messaging party on the basis of the transmission data (504);
retrieving (803) messaging party data, including permission information, relating to an identified messaging party from said database (DB1; 24);
applying (805) a filtering algorithm to the selectable data on the basis of the retrieved messaging party data, including the retrieved permission information, thereby selecting (805) data (916, 918) for inclusion in the message (500);
modifying (206) said message (500) so as to include the selected data (916, 918) therein; and
transmitting (207) the modified message (500) to the one or more receiving parties in accordance with the transmission data (504).

2. A method according to claim 1, in which the stored selectable data is stored according to a plurality of categories (1010), the categories (1010) relating to the subject matter of the stored data, and the permission information indicates one or more categories (1010) in relation to which a said messaging party has opted out.

3. A method according to either of claim 1 and claim 2, in which the stored selectable data is stored according to a plurality of selectable categories (1010), the categories (1010) relating to the subject matter of the stored data, and the method comprises applying the filtering algorithm to determine one or more said categories selected by a said messaging party.

4. A method according to any preceding claim, wherein the selectable data are specified in advance of receipt of the said message (500).

5. A method according to any one of the preceding claims, including selecting (805) data in accordance with a time and/or data associated with the said message (500).

6. A method according to claim 5, including selecting (805) data in accordance with a time of transmission or reception of the said message (500).

7. A method according to claim 5 or claim 6, including reviewing a schedule identifying entertainment activities, and selecting data in accordance with an entertainment activity that overlaps, at least in part, with a time of transmission or reception of the said message (500).

8. A method according to any one of the preceding claims, in which said selected data comprises advertisement data.

9. A method according to any preceding claim, in which the at least one identified messaging party comprises the sending party and the retrieved messaging party data, including the retrieved permission information, comprises information relating to the sending party.

10. A method according to any preceding claim, in which the at least one identified messaging party comprises a receiving party and the retrieved messaging party data, including the retrieved permission information, comprises information relating to the identified receiving party.

11. A method according to any preceding claim, in which the messaging party data comprises at least one of: data identifying messaging party characteristics; data indicating a location of the messaging party; data indicating a current location of the messaging party; data identifying a number and/or type of previous message modifications; a current time and/or date and/or data relating to events occurring at that time; scheduling data; a random selection parameter.

12. A method according to claim 11, including, in response to identifying from the transmission data (504) that there is a plurality of receiving parties of the said message (500), identifying characteristics common to at least two of the receiving parties, and selecting data on the basis of said common characteristics.

13. A method according to any one of the preceding claims, including comparing the selected data with data identifying subject matter that the receiving party is not interested in, and, in the event that the selected data matches data corresponding to the identified subject matter, the message (500) is not modified prior to transmission to the receiving party.

14. A method according to any one of the preceding claims, including recording the number of modified messages that have been transmitted to a receiving party and comparing the recorded number with a specified number of messages, and, in the event that the recorded number of messages matches the specified number of messages, the message (500) is not modified prior to transmission to the receiving party.

15. A method according to any one of the preceding claims, including recording the data that have been included in the transmitted messages and comparing the recorded data with the data selected for inclusion in the message (500), and, in the event that the recorded data match the selected data, repeating the step of selecting (805) data.

16. A method according to any one of the preceding claims, the method including receiving location data indicative of a location and selecting data on the basis of the location data.

17. A method according to claim 1, including selecting data at random.

18. A method according to any one of the preceding claims, wherein the message sent through the data communications network is a short message service message and the modifying step includes retrieving the content of the message, creating a multimedia message service message and including both the selected data and the retrieved content therein.

19. A message modification system for modifying messages (500) sent between messaging parties through a data communications network (6, 10, 14), the messages (500) including transmission data (504) and a message body (510), the transmission data (504) identifying one or more messaging parties, the messaging parties comprising a sending party and one or more receiving parties, and the message body (510) identifying content thereof which is specified by the sending party, the data communications network (6, 10, 14) comprising:
a data store (DB1; 20) arranged to store selectable data;
a database (DB1; 24) arranged to store messaging party data relating to at least one of said messaging party, the messaging party data comprising permission information indicative of permission of a said messaging party in relation to message modification,
wherein the message modification system is arranged, responsive to receipt of a said message (500), to:
identify (801) at least one said messaging party on the basis of the transmission data (504);
retrieve (803) messaging party data, including permission information, relating to an identified messaging party from said database (DB1; 24);
apply (805) a filter algorithm to the selectable data on the basis of the retrieved messaging party data, including the retrieved permission information, thereby selecting (805) data (916, 918) for inclusion in the message (500);
modify (206) said message (500) so as to include the selected data (916, 918) therein; and
transmit (207) the modified message (500) to the at least one receiving party in accordance with the transmission data (504).

20. A messaging system comprising a message modification system according to claim 19 and a server (S1), said server (S1) being arranged such that a messaging party may register for a message modification service, the message modification service being for modifying messages using said message modification system, wherein said message modification is dependent on whether said messaging parties have registered for the message modification service.

21. A messaging system according to claim 20, wherein said message modification is dependent on the messaging party having given consent to said message modification during registration.

22. A messaging system according to either of claim 20 and claim 21, wherein the server (S1) is arranged to receive said messaging party data from a messaging party and store the received messaging party data in said database (DB1; 24).

23. A messaging system according to claim 22, wherein the stored selectable data is stored according to a plurality of categories (1010), the categories (1010) relating to the subject matter of the stored selectable data, and the server (S1) is arranged such that the messaging party may opt out of message modification in relation to one or more said categories (1010).

24. A messaging system according to any of claim 20 to claim 23, wherein the stored selectable data is stored according to a plurality of categories (1010), the categories (1010) relating to the subject matter of the stored data, and the server (S1) is arranged such that the messaging party may select one or more categories (1010) for use in message modification.

25. A messaging system according to any of claim 20 to claim 24, wherein said server (S1) is arranged, responsive to a messaging party registration, to send a configuration message to a terminal associated with said messaging party, the configuration message identifying said message modification system, wherein the configuration message can be used to configure said terminal such that subsequent messages sent from said terminal are sent via said message modification system.

26. A messaging system according to any of claim 20 to claim 25, wherein the at least one identified messaging party comprises the sending party and the retrieved permission information comprises permission information relating to the sending party.

27. A messaging system according to any of claim 20 to claim 26, wherein the at least one identified messaging party comprises a receiving party, and the permission information comprises information relating to the identified receiving party.

28. A messaging system according to any of claim 20 to claim 27, wherein the messaging party data comprises at least one of: data indentifying messaging party characteristics; a location of the messaging party; data indication a current location of the messaging party; data identifying a number and/or type of previous message modifications; a current time and/or date and/or data relating to events occurring at that time; scheduling data; a random selection parameter.

## Patentansprüche

1. Verfahren zum Modifizieren einer Nachricht (500), welche zwischen Nachrichtenparteien über ein Datenkommunikationsnetzwerk (6, 10, 14) gesendet wird, wobei die Nachricht Übertragungsdaten (504) und einen Nachrichtenkörper (510) umfasst, wobei die Übertragungsdaten (504) eine oder mehrere Nachrichtenparteien identifizieren, wobei die Nachrichtenparteien eine sendende Partei und einen oder mehrere empfangende Parteien der Nachricht umfassen, und der Nachrichtenkörper (510) den Inhalt davon identifiziert, welcher durch eine sendende Partei spezifiziert wird, wobei das Datenkommunikationsnetzwerk (6, 10, 14) umfasst:
einen Datenspeicher (DB1; 20) angeordnet zum Speichern der auswählbaren Daten;
eine Datenbank (DB1; 24) angeordnet zum Speichern der Daten der Nachrichtenparteien, welche sich auf zumindest eine der Nachrichtenparteien beziehen, wobei die Daten der Nachrichtenpartei Erlaubnisinformationen umfassen, welche eine Erlaubnis für die Nachrichtenpartei in Bezug auf Nachrichtenmodifikation angeben,
wobei das Verfahren umfasst:
in Antwort auf das Empfangen der Nachricht (500), Identifizieren (801) zumindest einer Nachrichtenpartei auf der Basis der Übertragungsdaten (504);
Abfragen (803) der Daten der Nachrichtenpartei aus der Datenbank (DB1; 24), einschließlich der Erlaubnisinformationen, bezüglich einer identifizierten Nachrichtenpartei;
Anwenden (805) eines Filteralgorithmus auf die auswählbaren Daten auf der Basis der abgefragten Daten der Nachrichtenpartei, einschließlich der abgefragten Erlaubnisinformationen, dadurch Auswählen (805) der Daten (916, 918) zur Einbeziehung in die Nachricht (500);
Modifizieren (206) der Nachricht (500), so dass die ausgewählten Daten (916, 918) darin aufgenommen werden; und Übertragen (207) der modifizierten Nachricht (500) an die eine oder die mehreren empfangenden Parteien gemäß der Übertragungsdaten (504).

2. Verfahren nach Anspruch 1, in welchem die gespeicherten auswählbaren Daten gemäß einer Mehrzahl von Kategorien (1010) gespeichert werden, wobei die Kategorien (1010) sich auf den Gegenstand der gespeicherten Daten beziehen, und die Erlaubnisinformationen eine oder mehrere Kategorien (1010) angeben, in Bezug auf welche sich eine der Nachrichtenparteien abgemeldet hat.

3. Verfahren nach Anspruch 1 oder Anspruch 2, in welchem die gespeicherten auswählbaren Daten gemäß einer Mehrzahl von auswählbaren Kategorien (1010) gespeichert werden, wobei die Kategorien (1010) sich auf den Gegenstand der gespeicherten Daten beziehen, und das Verfahren das Anwenden des Filteralgorithmus umfasst, um eine oder mehrere der Kategorien, welche durch eine der Nachrichtenparteien ausgewählt wurden, zu bestimmen.

4. Verfahren nach einem der vorhergehenden Ansprüche, wobei die auswählbaren Daten vor Empfang der Nachricht (500) spezifiziert werden.

5. Verfahren nach einem der vorhergehenden Ansprüche, umfassend Auswählen (805) der Daten gemäß einer Zeit und/oder Daten, welche mit der Nachricht (500) assoziiert sind.

6. Verfahren nach Anspruch 5, umfassend Auswählen (805) von Daten gemäß einem Zeitpunkt der Übertragung oder des Empfangs der Nachricht (500).

7. Verfahren nach Anspruch 5 oder Anspruch 6, umfassend Überprüfen eines Zeitplans, welcher Unterhaltungsaktivitäten bezeichnet, und Auswählen der Daten gemäß einer Unterhaltungsaktivität, welche zumindest in Teilen mit einem Zeitpunkt der Übertragung oder des Empfangs der Nachricht (500) überlappt.

8. Verfahren nach einem der vorhergehenden Ansprüche, in welchem die ausgewählten Daten Werbedaten umfassen.

9. Verfahren nach einem der vorhergehenden Ansprüche, in welchem die mindestens eine identifizierte Nachrichtenpartei die sendende Partei umfasst und die abgefragten Daten der Nachrichtenpartei, einschließlich der abgefragten Erlaubnisinformationen, Informationen bezüglich der sendenden Partei umfassen.

10. Verfahren nach einem der vorhergehenden Ansprüche, in welchem die mindestens eine identifizierte Nachrichtenpartei eine empfangende Partei umfasst und die abgefragten Daten der Nachrichtenpartei, einschließlich der abgefragten Erlaubnisinformationen, Informationen bezüglich der identifizierten empfangenden Partei umfassen.

11. Verfahren nach einem der vorhergehenden Ansprüche, in welchem die Daten der Nachrichtenpartei mindestens eines der folgenden umfassen: Daten, welche Charakteristika der Nachrichtenpartei identifizieren; Daten, welche einen Ort der Nachrichtenpartei angeben; Daten, welche einen derzeitigen Ort der Nachrichtenpartei angeben; Daten, welche eine Anzahl und/oder einen Typ von vorhergehenden Nachrichtenmodifikationen identifizieren; eine derzeitige Zeit und/oder Datum und/oder Daten bezüglich Ereignissen, welche zu jener Zeit stattfinden; Zeitplandaten; und Zufallsauswahlparameter.

12. Verfahren nach Anspruch 11, umfassend, in Antwort auf das Identifizieren aus den Übertragungsdaten (504), dass es eine Mehrzahl von empfangenden Parteien der Nachricht (500) gibt, Identifizieren von Charakteristika, welche mindestens zwei der empfangenden Parteien gemein sind, und Auswählen von Daten auf der Basis der gemeinsamen Charakteristika.

13. Verfahren nach einem der vorhergehenden Ansprüche, umfassend Vergleichen der ausgewählten Daten mit Daten, welche den Gegenstand identifizieren, an welchem die empfangende Partei nicht interessiert ist, und, im Falle, dass die ausgewählten Daten mit Daten, welche dem identifizierten Gegenstand entsprechen, übereinstimmen, wird die Nachricht (500) nicht vor der Übertragung an die empfangende Partei modifiziert.

14. Verfahren nach einem der vorhergehenden Ansprüche, umfassend Aufzeichnen der Anzahl von modifizierten Nachrichten, welche an eine empfangende Partei übertragen worden sind und Vergleichen der aufgezeichneten Anzahl mit einer spezifischen Anzahl von Nachrichten, und, in dem Falle, dass die aufgezeichnete Anzahl der Nachrichten mit der spezifizierten Anzahl der Nachrichten übereinstimmt, wird die Nachricht (500) nicht vor der Übertragung an die empfangende Partei modifiziert.

15. Verfahren nach einem der vorhergehenden Ansprüche, umfassend Aufzeichnen der Daten, welche in die übertragenen Nachrichten einbezogen worden sind und Vergleichen der aufgezeichneten Daten mit den Daten, welche für die Einbeziehung in die Nachricht (500) ausgewählt wurden, und, in dem Falle, dass die aufgezeichneten Daten mit den ausgewählten Daten übereinstimmen, Wiederholen des Schritts des Auswählens (805) von Daten.

16. Verfahren nach einem der vorhergehenden Ansprüche, wobei das Verfahren das Empfangen von Ortsdaten, welche einen Ort angeben, und das Auswählen der Daten auf der Basis der Ortsdaten umfasst.

17. Verfahren nach Anspruch 1, umfassend zufälliges Auswählen von Daten.

18. Verfahren nach einem der vorhergehenden Ansprüche, in welchem die Nachricht, welche über das Datenkommunikationsnetzwerk gesendet wird, eine Kurznachrichtendienst-Nachricht ist und der modifizierende Schritt das Abfragen des Inhalts der Nachricht, das Erzeugen einer Multimedianachrichtendienst-Nachricht und das Einbeziehen sowohl der ausgewählten Daten als auch des abgefragten Inhalts darin umfasst.

19. Nachrichtenmodifikationssystem zum Modifizieren von Nachrichten (500), welche zwischen Nachrichtenparteien über ein Datenkommunikationsnetzwerk (6, 10, 14) gesendet werden, wobei die Nachrichten (500) Übertragungsdaten (504) und einen Nachrichtenkörper (510) umfassen, wobei die Übertragungsdaten (504) eine oder mehrere Nachrichtenparteien identifizieren, wobei die Nachrichtenparteien eine sendende Partei und eine oder mehrere empfangende Parteien umfassen, und der Nachrichtenkörper (510) den Inhalt davon identifiziert, welcher durch die sendende Partei spezifiziert ist , wobei das Datenkommunikationsnetzwerk (6, 10, 14) umfasst:
einen Datenspeicher (DB1; 20) angeordnet zum Speichern der auswählbaren Daten;
eine Datenbank (DB1; 24) angeordnet zum Speichern der Daten der Nachrichtenpartei, welche mindestens eine der Nachrichtenparteien betreffen, wobei die Daten der Nachrichtenpartei Erlaubnisinformationen umfassen, welche Erlaubnis einer Nachrichtenpartei in Bezug auf Nachrichtenmodifikation angeben, wobei das Nachrichtenmodifikationssystem angeordnet ist auf den Empfang einer Nachricht (500) zu reagieren, um:
mindestens eine Nachrichtenpartei auf der Basis der Übertragungsdaten (504) zu identifizieren (801);
Daten der Nachrichtenpartei aus der Datenbank (DB1; 24),
einschließlich der Erlaubnisinformationen, bezüglich einer identifizierten Nachrichtenpartei abzufragen (803);
einen Filteralgorithmus auf die auswählbaren Daten auf der Basis der wiederhergestellten Daten der Nachrichtenpartei,
einschließlich der abgefragten Erlaubnisinformationen anzuwenden (805) und dadurch Daten (916, 918) für die Einbeziehung in die Nachricht (500) auszuwählen (805);
die Nachricht (500) zu modifizieren (206), um die ausgewählten Daten (916, 918) darin einzubeziehen; und
die modifizierte Nachricht (500) an die mindestens eine empfangende Parteien gemäß den Übertragungsdaten (504) zu übertragen (207).

20. Nachrichtensystem umfassend ein Nachrichtenmodifikationssystem nach Anspruch 19 und einen Server (S1), wobei der Server (S1) angeordnet ist, so dass eine Nachrichtenpartei sich für einen Nachrichtenmodifikationsdienst registrieren kann, wobei der Nachrichtenmodifikationsdienst zum Modifizieren der Nachrichten unter Verwendung des Nachrichtenmodifikationssystems dient, wobei die Nachrichtenmodifikation davon abhängig ist, ob die Nachrichtenparteien sich für den Nachrichtenmodifikationsdienst registriert haben.

21. Nachrichtensystem nach Anspruch 20, in welchem die Nachrichtenmodifikation von der Nachrichtenpartei abhängt, welche der Nachrichtenmodifikation während der Registrierung zugestimmt hat.

22. Nachrichtensystem nach einem der Ansprüche 20 und Anspruch 21, in welchem der Server (S₁) angeordnet ist zum Empfangen der Daten der Nachrichtenpartei von einer Nachrichtenpartei und Speichern der empfangenen Daten der Nachrichtenpartei in der Datenbank (DB₁; 24).

23. Nachrichtensystem nach Anspruch 22, in welchem die gespeicherten auswählbaren Daten gemäß einer Mehrzahl von Kategorien (1010) gespeichert werden, wobei die Kategorien (1010) sich auf den Gegenstand der gespeicherten auswählbaren Daten beziehen, und der Server (S1) so angeordnet ist, dass die Nachrichtenpartei sich von der Nachrichtenmodifikation in Bezug auf eine oder mehrere der Kategorien (1010) abmelden kann.

24. Nachrichtensystem nach einem der Ansprüche 20 bis 23, in welchem die gespeicherten auswählbaren Daten gemäß einer Mehrzahl von Kategorien (1010) gespeichert werden, wobei die Kategorien (1010) sich auf den Gegenstand der gespeicherten Daten beziehen, und der Server (S1) so angeordnet ist, dass die Nachrichtenpartei eine oder mehrere Kategorien (1010) zur Verwendung in der Nachrichtenmodifikation auswählen kann.

25. Nachrichtensystem gemäß einem der Ansprüche 20 bis 24, in welchem der Server (S1) angeordnet ist, in Antwort auf eine Registrierung der Nachrichtenpartei, eine Konfigurationsnachricht an ein Terminal zu senden, welches mit der Nachrichtenpartei assoziiert ist, wobei die Konfigurationsnachricht das Nachrichtenmodifikationssystem identifiziert, wobei die Konfigurationsnachricht zum Konfigurieren des Terminals verwendet werden kann, so dass die nachfolgenden Nachrichten, welche vom Terminal gesendet werden, über das Nachrichtenmodifikationssystem gesendet werden.

26. Nachrichtensystem nach einem der Ansprüche 20 bis 25, in welchem die mindestens eine identifizierte Nachrichtenpartei die sendende Partei umfasst und die wiederhergestellten Erlaubnisinformationen Erlaubnisinformationen bezüglich der sendenden Partei umfassen.

27. Nachrichtensystem nach einem der Ansprüche 20 bis 26, in welchem die mindestens eine identifizierte Nachrichtenpartei eine empfangende Partei umfasst und die Erlaubnisinformationen Informationen bezüglich der identifizierten empfangenden Partei umfassen.

28. Nachrichtensystem nach einem der Ansprüche 20 bis 27, in welchem die Daten der Nachrichtenpartei mindestens eines der folgenden umfassen: Daten, welche die Charakteristika der Nachrichtenpartei identifizieren; einen Ort der Nachrichtenpartei; Daten, welche einen derzeitigen Ort der Nachrichtenpartei angeben; Daten, welche eine Anzahl und/oder einen Typ von vorhergehenden Nachrichtenmodifikationen identifizieren; eine derzeitige Zeit und/oder Datum und/oder Daten bezüglich Ereignissen, welche zu jener Zeit stattfinden; Zeitplandaten; einen Zufallsauswahlparameter.

## Revendications

1. Procédé de modification d'un message (500) envoyé entre des correspondants de messagerie sur un réseau de communication de données (6, 10, 14), le message contenant des données de transmission (504) et un corps de message (510), les données de transmission (504) identifiant un ou plusieurs correspondants de messagerie, les correspondants de messagerie comprenant un correspondant émetteur et un ou plusieurs correspondants destinataires dudit message, et le corps de message (510) identifiant le contenu de celui-ci, qui est spécifié par un correspondant émetteur, le réseau de communication de données (6, 10, 14) comprenant :
une mémoire de données (DB1 ; 20) conçue pour stocker des données sélectionnables ;
une base de données (DB1 ; 24) conçue pour stocker des données de correspondant de messagerie concernant au moins l'un desdits correspondants de messagerie, les données de correspondant de messagerie comprenant des informations de permission indiquant la permission dudit correspondant de messagerie relativement à une modification du message,
le procédé comprenant les étapes suivantes :
- en réponse à la réception dudit message (500), identifier (801) au moins l'un desdits correspondants de messagerie en fonction des données de transmission (504) ;
- récupérer (803) des données de correspondant de messagerie, incluant des informations de permission, concernant un correspondant de messagerie identifié, depuis ladite base de données (DB1 ; 24) ;
- appliquer (805) un algorithme de filtrage aux données sélectionnables en fonction des données de correspondant de messagerie récupérées, incluant les informations de permission récupérées, pour ainsi sélectionner (805) des données (916, 918) à inclure dans le message (500) ;
- modifier (206) ledit message (500) de façon à y inclure les données (916, 918) sélectionnées ; et
- transmettre (207) le message modifié (500) au(x) correspondant(s) destinataire(s) en fonction des données de transmission (504).

2. Procédé selon la revendication 1, dans lequel les données sélectionnables stockées sont stockées selon une pluralité de catégories (1010), les catégories (1010) concernant le sujet des données stockées, et les informations de permission indiquent une ou plusieurs catégories (1010) relativement auxquelles ledit correspondant de messagerie s'est désinscrit.

3. Procédé selon la revendication 1 ou la revendication 2, dans lequel les données sélectionnables stockées sont stockées selon une pluralité de catégories sélectionnables (1010), les catégories (1010) concernant le sujet des données stockées, et le procédé comprend l'étape consistant à appliquer l'algorithme de filtrage pour déterminer une ou plusieurs desdites catégories sélectionnées par l'un desdits correspondants de messagerie.

4. Procédé selon l'une quelconque des revendications précédentes, dans lequel les données sélectionnables sont spécifiées avant la réception dudit message (500).

5. Procédé selon l'une quelconque des revendications précédentes, comprenant l'étape consistant à sélectionner (805) des données en fonction d'une heure et/ou de données associées audit message (500).

6. Procédé selon la revendication 5, comprenant l'étape consistant à sélectionner (805) des données en fonction d'une heure de transmission ou de réception dudit message (500).

7. Procédé selon la revendication 5 ou la revendication 6, comprenant les étapes consistant à passer en revue un programme identifiant des activités de divertissement, et à sélectionner des données en fonction d'une activité de divertissement qui chevauche, au moins en partie, une heure de transmission ou de réception dudit message (500).

8. Procédé selon l'une quelconque des revendications précédentes, dans lequel lesdites données sélectionnées comprennent des données publicitaires.

9. Procédé selon l'une quelconque des revendications précédentes, dans lequel l'au moins un correspondant de messagerie identifié comprend le correspondant émetteur, et les données de correspondant de messagerie récupérées, incluant les informations de permission récupérées, comprennent des informations concernant le correspondant émetteur.

10. Procédé selon l'une quelconque des revendications précédentes, dans lequel l'au moins un correspondant de messagerie identifié comprend un correspondant destinataire, et les données de correspondant de messagerie récupérées, incluant les informations de permission récupérées, comprennent des informations concernant le correspondant destinataire identifié.

11. Procédé selon l'une quelconque des revendications précédentes, dans lequel les données de correspondant de messagerie comprennent au moins l'un des types de données suivants : des données identifiant des caractéristiques de correspondant de messagerie ; des données indiquant une localisation du correspondant de messagerie ; des données indiquant une localisation en cours du correspondant de messagerie ; des données identifiant un nombre et/ou un type de modifications de message antérieures ; une heure et/ou une date en cours et/ou des données concernant des événements se produisant à cette heure ; des données de programmation ; un paramètre de sélection aléatoire.

12. Procédé selon la revendication 11, comprenant, en réponse à l'identification à partir des données de transmission (504) du fait qu'il y a une pluralité de correspondants destinataires dudit message (500), les étapes consistant à identifier des caractéristiques communes à au moins deux des correspondants destinataires, et à sélectionner des données en fonction desdites caractéristiques communes.

13. Procédé selon l'une quelconque des revendications précédentes, comprenant l'étape consistant à comparer les données sélectionnées à des données identifiant le sujet concernant lequel le correspondant destinataire n'est pas intéressé, et, dans le cas où les données sélectionnées coïncident avec les données correspondant au sujet identifié, le message (500) n'est pas modifié avant sa transmission au correspondant destinataire.

14. Procédé selon l'une quelconque des revendications précédentes, comprenant les étapes consistant à enregistrer le nombre de messages modifiés qui ont été transmis à un correspondant destinataire et à comparer le nombre enregistré à un nombre de messages spécifié et, dans le cas où le nombre de messages enregistré coïncide avec le nombre de messages spécifié, le message (500) n'est pas modifié avant sa transmission au correspondant destinataire.

15. Procédé selon l'une quelconque des revendications précédentes, comprenant les étapes consistant à enregistrer les données qui ont été incluses dans les messages transmis et à comparer les données enregistrées aux données sélectionnées pour être incluses dans le message (500) et, dans le cas où les données enregistrées coïncident avec les données sélectionnées, l'étape de sélection (805) de données est répétée.

16. Procédé selon l'une quelconque des revendications précédentes, lequel procédé comprend les étapes consistant à recevoir des données de localisation indiquant une localisation et à sélectionner des données en fonction des données de localisation.

17. Procédé selon la revendication 1, comprenant l'étape consistant à sélectionner des données de manière aléatoire.

18. Procédé selon l'une quelconque des revendications précédentes, dans lequel le message envoyé sur le réseau de communication de données est un message du Service de Messages Courts, et l'étape de modification comprend les étapes consistant à récupérer le contenu du message, à créer un message du Service de Messages Multimédia, et à inclure dans ce dernier les données sélectionnées et le contenu récupéré.

19. Système de modification de message pour la modification de messages (500) envoyés entre des correspondants de messagerie sur un réseau de communication de données (6, 10, 14), les messages (500) contenant des données de transmission (504) et un corps de message (510), les données de transmission (504) identifiant un ou plusieurs correspondants de messagerie, les correspondants de messagerie comprenant un correspondant émetteur et un ou plusieurs correspondants destinataires, et le corps de message (510) identifiant le contenu de celui-ci, qui est spécifié par le correspondant émetteur, le réseau de communication de données (6, 10, 14) comprenant :
une mémoire de données (DB1 ; 20) conçue pour stocker des données sélectionnables ;
une base de données (DB1 ; 24) conçue pour stocker des données de correspondant de messagerie concernant au moins l'un desdits correspondants de messagerie, les données de correspondant de messagerie comprenant des informations de permission indiquant la permission de l'un desdits correspondants de messagerie relativement à une modification de message,
le système de modification de message étant conçu pour, en réponse à la réception d'un dit message (500) :
- identifier (801) au moins l'un desdits correspondants de messagerie en fonction des données de transmission (504) ;
- récupérer (803) des données de correspondant de messagerie, incluant des informations de permission, concernant un correspondant de messagerie identifié, depuis ladite base de données (DB1 ; 24) ;
- appliquer (805) un algorithme de filtrage aux données sélectionnables en fonction des données de correspondant de messagerie récupérées, incluant les informations de permission récupérées, pour ainsi sélectionner (805) des données (916, 918) à inclure dans le message (500) ;
- modifier (206) ledit message (500) de façon à y inclure les données (916, 918) sélectionnées ; et
- transmettre (207) le message modifié (500) à l'au moins un correspondant destinataire en fonction des données de transmission (504).

20. Système de messagerie comprenant un système de modification de message selon la revendication 19 et un serveur (S1), ledit serveur (S1) étant conçu de telle manière qu'un correspondant de messagerie puisse s'inscrire à un service de modification de message, le service de modification de message étant destiné à modifier des messages au moyen dudit système de modification de message, laquelle modification de message dépend du fait que lesdits correspondants de messagerie se sont inscrits ou non au service de modification de message.

21. Système de messagerie selon la revendication 20, dans lequel ladite modification de message dépend du fait que le correspondant de messagerie a donné son accord pour ladite modification de message lors de l'inscription.

22. Système de messagerie selon la revendication 20 ou la revendication 21, dans lequel le serveur (S1) est conçu pour recevoir lesdites données de correspondant de messagerie en provenance d'un correspondant de messagerie et pour stocker les données de correspondant de messagerie reçues dans ladite base de données (DB1 ; 24).

23. Système de messagerie selon la revendication 22, dans lequel les données sélectionnables stockées sont stockées selon une pluralité de catégories (1010), les catégories (1010) concernant le sujet des données sélectionnables stockées, et le serveur (S1) est conçu de telle manière que le correspondant de messagerie puisse se désinscrire de la modification de message relativement à une ou plusieurs desdites catégories (1010).

24. Système de messagerie selon l'une quelconque des revendications 20 à 23, dans lequel les données sélectionnables stockées sont stockées selon une pluralité de catégories (1010), les catégories (1010) concernant le sujet des données stockées, et le serveur (S1) est conçu de telle manière que le correspondant de messagerie puisse sélectionner une ou plusieurs catégories (1010) à utiliser dans la modification de message.

25. Système de messagerie selon l'une quelconque des revendications 20 à 24, dans lequel ledit serveur (S1) est conçu pour, en réponse à une inscription d'un correspondant de messagerie, envoyer un message de configuration à un terminal associé audit correspondant de messagerie, le message de configuration identifiant ledit système de modification de message, le message de configuration pouvant être utilisé pour configurer ledit terminal de telle manière que les messages ultérieurs envoyés par ledit terminal soient envoyés via ledit système de modification de message.

26. Système de messagerie selon l'une quelconque des revendications 20 à 25, dans lequel l'au moins un correspondant de messagerie identifié comprend le correspondant émetteur, et les informations de permission récupérées comprennent des informations concernant le correspondant émetteur.

27. Système de messagerie selon l'une quelconque des revendications 20 à 26, dans lequel l'au moins un correspondant de messagerie identifié comprend un correspondant destinataire, et les informations de permission récupérées comprennent des informations concernant le correspondant destinataire identifié.

28. Système de messagerie selon l'une quelconque des revendications 20 à 27, dans lequel les données de correspondant de messagerie comprennent au moins l'un des types de données suivants : des données identifiant des caractéristiques de correspondant de messagerie ; une localisation du correspondant de messagerie ; des données indiquant une localisation en cours du correspondant de messagerie ; des données identifiant un nombre et/ou un type de modifications de message antérieures ; une heure et/ou une date en cours et/ou des données concernant des événements se produisant à cette heure ; des données de programmation ; un paramètre de sélection aléatoire.
